Europäisches Patentamt

European Patent Office

Office européen des brevets

(19)

(11) Publication number: **0 374 114**
**A2**

## EUROPEAN PATENT APPLICATION

(12)

(21) Application number: **89850416.2**

(22) Date of filing: **27.11.89**

(51) Int. Cl.5: **G06F 3/06**

---

(30) Priority: **12.12.88 JP 312040/88**

(43) Date of publication of application:
**20.06.90 Bulletin 90/25**

(84) Designated Contracting States:
**DE FR GB**

(71) Applicant: **International Business Machines Corporation**
**Old Orchard Road**
**Armonk, N.Y. 10504(US)**

(72) Inventor: **Nakamura, Takashi**
**1-33-18 Kaminagaya Kohnan-ku**
**Yokohama-shi Kanagawa-ken(JP)**
Inventor: **Numata, Tsutomu**
**2-11-11-302 Sohbudai**
**Sagamihara-shi Kanagawa-ken(JP)**
Inventor: **Ohgaki, Kazutaka**
**Hachimanbiru 304 3600 Kamitsuruma**
**Sagamihara-shi Kanagawa-ken(JP)**

(74) Representative: **Johansson, Lars E. et al**
**IBM Svenska AB Intellectual Property**
**Department 4-01**
**S-163 92 Stockholm(SE)**

---

(54) **Storage control system for a disk unit.**

(57) In a storage control system a host computer (4) is feeding and receiving data from a disk unit (12), the operation of which is controlled by a microprocessor (6). A time sharing multiplex controller (8) provides storage access for the host computer, the disk unit and the microprocessor to a shared storage (10), on a priority basis.

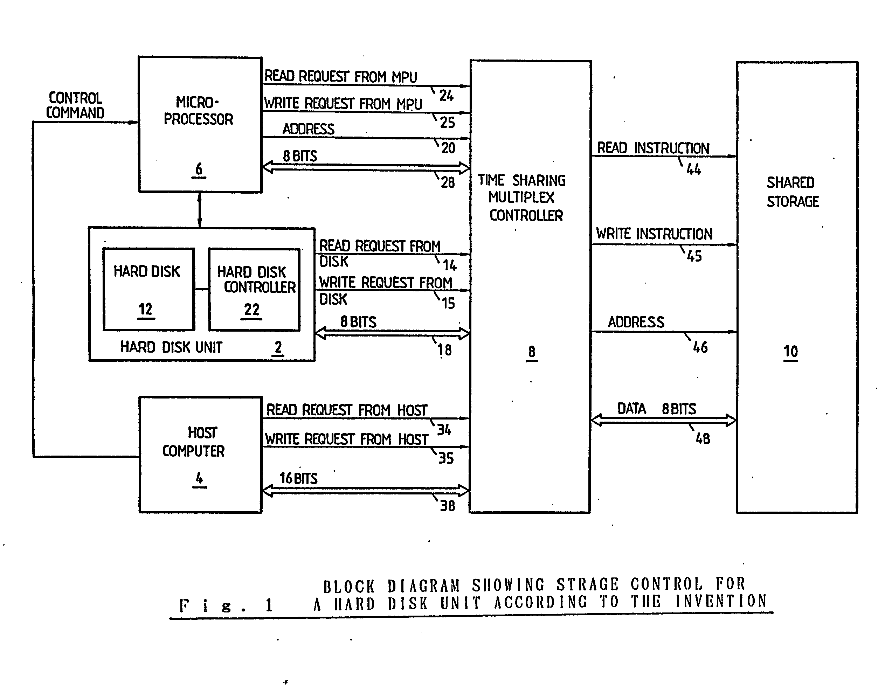

BLOCK DIAGRAM SHOWING STRAGE CONTROL FOR
Fig. 1 A HARD DISK UNIT ACCORDING TO THE INVENTION

# STORAGE CONTROL SYSTEM FOR A DISK UNIT

## A. Field of the invention

The present invention relates to a storage controller for a disk unit, for example, a magnetic hard disk unit, the operation of which is controlled by a microprocessor and which feeds and receives data to and from a host computer.

## B. Prior art

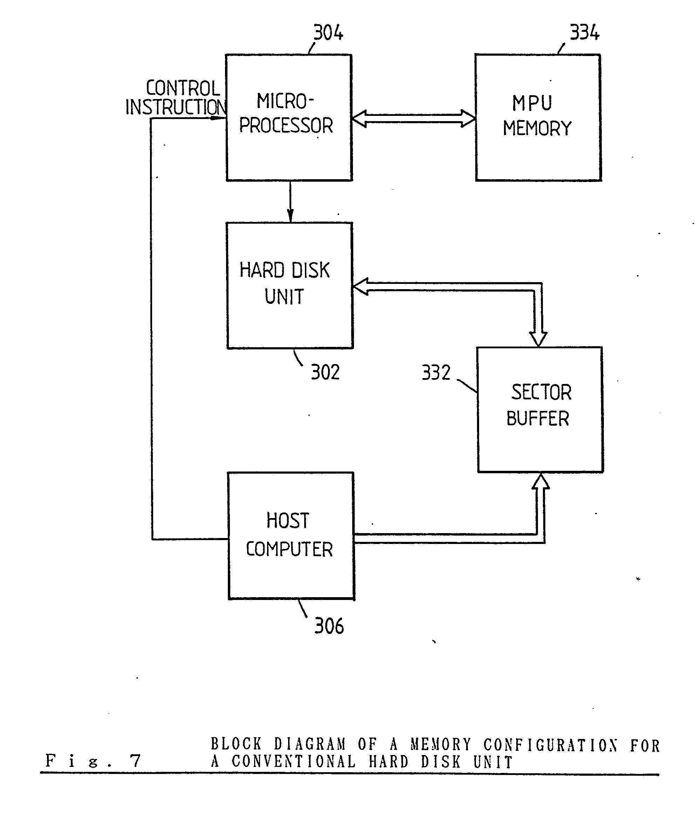

FIG. 7 shows a memory configuration of a conventional hard disk unit. As shown in the figure, the conventional hard disk unit requires two storages - the first is a sector buffer 332 consisting of a random access memory for temporarily storing data, when feeding or receiving data between a hard disk unit 302 and a host computer 306, and the second is an MPU memory 334 consisting of a random access memory for storing data necessary for a microprocessor 304 which controls the operation of the hard disk unit 302.

## C. Problem to be solved by the invention

Although, while a memory capacity required by the MPU memory 334 shown in Figure 7 is 7K to 32K bytes, a memory capacity required by the sector buffer 332 is as very small as 1K byte, the configuration of Figure 7 is expensive because not only the MPU memory 334 but also the sector buffer 332 require a separate random access memory. Particularly, recently, sometimes small capacity memories are not available, because of short of its supply; in such an event, it becomes inevitable to use a large capacity memory for the sector buffer 332 with the small capacity, leaving large unused regions in the memory, thus detracting from efficient use of memory.

The present invention was conceived to solve such a problem of prior art, and its object is to efficiently utilize a memory for a disk unit the operation of which is controlled by a microprocessor and which feeds and receives data to and from a host processor.

## D. Means for solving the problem

The present invention is defined in the attached claims.

In accordance with the present invention, one storage means is shared between a microprocessor, a host computer and a disk unit, and a time sharing multiplex control means is provided which writes data outputted from the microprocessor, the host computer and the disk unit into the shared storage means in a predetermined priority, and which reads the data stored in the shared storage means to the microprocessor, the host computer and the disk unit in a predetermined priority.

The time sharing multiplex control means preferably has a prioritizing circuit which gives the first priority to reading and writing of data between the microprocessor and the shared storage means, the second priority to reading and writing of data between the disk unit and the shared storage means, and the third priority to reading and writing of data between the host computer and the shared storage means. The reasons are that the highest priority should be given to reading and writing of data from and to the microprocessor, because it performs important works such as control of operation of a head actuator of the disk unit, and the next high priority should be given to reading and writing of data from and to the disk unit, because the disk unit has parts being always in mechanical motion like the motor for driving the disk and the head actuator, therefore, no long waiting time should be taken for the disk unit.

It should be noted that, in this specification, a term "access" is used as a generic term for read and write.

## E. Advantages of the invention

According to this invention, merely by adding a simple time sharing multiplex control, it is possible to provide one storage means with the function of the MPU memory of storing the data the microprocessor uses to control the disk unit and the function of the so-called sector buffer used for delivery of data between the disk unit and the host computer, thereby enabling effective utilization of the memory for the disk unit.

## F. Brief Description of the Drawings:

FIG. 1 is a block diagram showing a storage control system for a hard disk unit according to the invention;

FIG. 2 is a block diagram illustrating a detailed configuration of the time sharing multiplex control and a shared storage shown in FIG. 1;

FIG. 3 is a block diagram illustrating a configuration of the timing control shown in FIG. 2;

FIG. 4 is a block diagram illustrating detailed configuration of the requester identifying circuit and the prioritizing circuit shown in FIG. 3;

FIG. 5 is a block diagram illustrating a detailed configuration of the R/W request holding circuit shown in FIG. 3;

FIG. 6 is a time chart showing the operations of the system of this invention shown in FIGS. 1 through 5; and

FIG. 7 is a block diagram showing the memory configuration of the conventional hard disk unit.

G. Embodiment

FIG. 1 shows an embodiment of a magnetic hard disk unit according to the invention. The magnetic hard disk unit 2 has a spindle motor for rotating a hard disk 12 and its control circuit (not shown), a magnetic head for writing or reading data into or from the hard disk 12, a head actuator (not shown) that supports the magnetic head and performs the seek operation and the tracking control, a microprocessor 6 for controlling operation of a spindle motor and the head actuator, and a hard disk controller 22 that controls data read to or written from the magnetic head.

The host computer 4 outputs control commands such as a read command and a write command to the microprocessor 6. Upon receiving the control commands, the microprocessor 6 performs the start or the stop of the spindle motor and the seek and the tracking operations of the head actuator so as to permit the hard disk unit 2 to perform the write and read operations. After the above-described operations are completed, the hard disk controller 22 receives an instruction from the microprocessor 6 to feed write data to the hard disk unit 12 or to receive read data from the hard disk unit 12.

In order to read from the shared storage data necessary for providing instructions such as a read instruction or a write instruction to the hard disk unit 2 (hereinafter referred to as "MPU data"), the microprocessor 6 outputs to a time sharing multiplex control 8 a 16 bit address indicating a storage location in the shared storage 10 where required MPU data is stored, and a read request through lines 20 and 24. Upon granting the read request from the microprocessor 6, the time sharing multiplex control 8 outputs a read instruction on a line 44K and an address outputted from the microprocessor 6 on a line 46, and supplies 8 bit MPU data read out of the shared storage to the microprocessor 6 through 8 bit data buses 48 and 28.

In order to write 8 bit MPU data to the shared storage 10, the microprocessor 6 outputs to the time sharing multiplex control 8 a write request through a line 25, a 16 bit address, which indicates the storage location in the shared storage 10 where the MPU data is to be written, through a line 20, and the MPU data through an 8 bit data bus 28. Upon granting the write request from the microprocessor 6, the time sharing multiplex control 8 outputs a write instruction on a line 45, and the address outputted from the microprocessor 6 on a line 46, and writes the MPU data outputted from the microprocessor 6 in the shared storage 10 through the 8 bit data buses 28 and 48.

In order to read the host data stored in the shared storage 10, the hard disk unit 2 issues a read request to the time sharing multiplex control 8 through a line 14. What is called host data is data to be outputted from the host computer 4 and to be written in the hard disk unit 2, which includes text and graphics data inputted by a user into the host computer through such an input means as a keyboard, as well as data that, after written from the host computer 4 into the hard disk unit 2 through the shared storage 10, are again read to the host computer 4 through the shared storage 10, and outputted from the host computer 4, after being edited or otherwise modified.

The hard disk unit 2 does not request to read only a specific portion of the host data stored in the shared storage 10, but requests to read the 512 byte overall host data stored in the shared storage 10. However, if reading of overall host data is continuously performed, the microprocessor 6 becomes unable to read and write the MPU data from and in the shared storage 10, so that the hard disk unit 2 makes the read request of overall host data by issuing a 1 byte host data read request 512 times.

The time sharing multiplex control 8 has a host data address generator consisting of a down-counter, which, as described later, decrements its value one by one from 511 every time it grants a read request from the hard disk unit 2, and outputs the addresses to a line 46 corresponding to the sequence of the read requests it has granted, and read instructions to a line 44. In response thereto, 8 bit host data is read out from the shared storage 10; the data is fed to the hard disk unit 2 through 8 bit data buses 48 and 18.

In order to write disk data stored in the hard disk 12 in the shared storage 10, the hard disk unit 2 issues a write request to the time sharing multiplex control 8 through a line 15. Here, the disk data means the data to be read from the hard disk 12 and written in the host computer 2, their contents being identical with those of the host data. That is, the disk data include text and graphics data stored by the users in the hard disk 12 through the host computer 4 by use of such an inputting device as a keyboard, as well as data that is read from the hard disk 12 to the host computer 4 and that is again written in the hard disk 12, after being edited or otherwise modified.

The hard disk unit 2 does not request writing specific disk data only at a specific location in the shared storage 10, but requests writing 512 byte overall disk data stored in the hard disk 12. However, if the overall disk data is continuously written, the microprocessor 6 becomes unable to read and write the MPU data from and in the shared storage 10 during that period; therefore, the hard disk unit 12 requests writing the overall disk data by issuing a 1 byte disk data write request 512 times. It should be noted that the hard disk unit 12 feeds 1 byte disk data every time a write request is issued to the time sharing multiplex control 8 through and 8 bit data bus 18 and this control 8 temporarily stores this disk data.

The time sharing control 8, as described later, has a disk data address generator consisting of a down-counter, that decrements its count value one by one from 1023 every time it grants a write request by the hard disk unit 2, to output the addresses corresponding to the sequence of the granted write requests to a line 46, a write instruction to the line 45, and disk data to the 8 bit data bus 48, thereby writing the disk data in the shared storage 10.

The host computer 4 requests reading the disk data stored in the shared storage 10, the request being made for reading the 512 byte overall disk data stored in the shared storage 10. However, if the overall disk data is continuously read, the microprocessor 6 becomes unable to read and write from and in the shared storage 10 during that period; therefore, the host computer 4 requests reading the overall disk data by issuing to a line 34K a 1 byte disk data read request 512 times.

Upon granting a read request by the host computer 4, the time sharing multiplex control 8 outputs to the line 46 addresses corresponding to the sequence of the granted read requests from the disk data address generator consisting of a down-counter hereabove described, while outputting read instructions to the line 44. In response thereto, 8 bit disk data is read from the shared storage 10, and these data are inputted into the time sharing multiplex control 8 through the 8 bit data bus 48. This control 8 creates a 16 bit data with the 8 bit disk data previously inputted as its upper bits and with the 8 bit disk data inputted this time as its lower 8 bits, to feed it to the host computer 4 through a 16 bit data bus 38.

The host computer 4 requests writing the 512 byte host data, being its output data, by issuing a 1 byte host data write request to a line 35 512 times, while outputting 16 bit host data to a 16 bit bus 38 every time it makes 2 write requests. Once granting the write request by the host computer 4, the time sharing multiplex control 8 outputs to the line 46 the addresses corresponding to the orders of the granted write requests from the host data address generator consisting of a down-counter hereabove-described, while outputting write instructions to the line 45. The time sharing multiplex control 8, when it receives 16 bit host data this time, outputs its upper 8 bits to the bus 48, but if it does not receive the 16 bit host data this time, it outputs to the bus 48 the lower 8 bits of the 16 bit host data it previously received. In that way, the host data are written in the shared storage 10.

The host computer 4 sets the read and write cycles of the shared storage 10, and gives a notice of them not only to the microprocessor but to the hard disk unit 2 as well through the microprocessor 6. Accordingly, the microprocessor 6, hard disk unit 2 and the host computer 4 output read requests during the read cycle of the shared storage 10, but output write requests during the write cycle; therefore, read and write requests will not be issued simultaneously. The host computer 4, hard disk unit 2 and the microprocessor 6 never outputs any read or write request, until after 7 memory cycle clocks of the shared storage 10 are outputted, after they themselves issue read requests.

This is to ensure the system to preclude any erroneous operations of the time sharing multiplex control 8.

During the read cycle, the time sharing multiplex control 8 gives the final priority to the read request from the microprocessor 6, the second priority to that from the hard disk unit 2, and the third priority to that from the host computer 4, while, during the write cycle, it gives the first priority to the write request from the microprocessor 6, the second priority to that from the hard disk unit 2, and the third priority to that from the host computer 4. That is, the time sharing multiplex control 8 gives the first priority to the read and write of data between the microprocessor 6 and the shared storage 10, the second priority to that between the hard disk 2 and the shared storage 10, and the third priority to that between the host computer 4 and the shared storage 10.

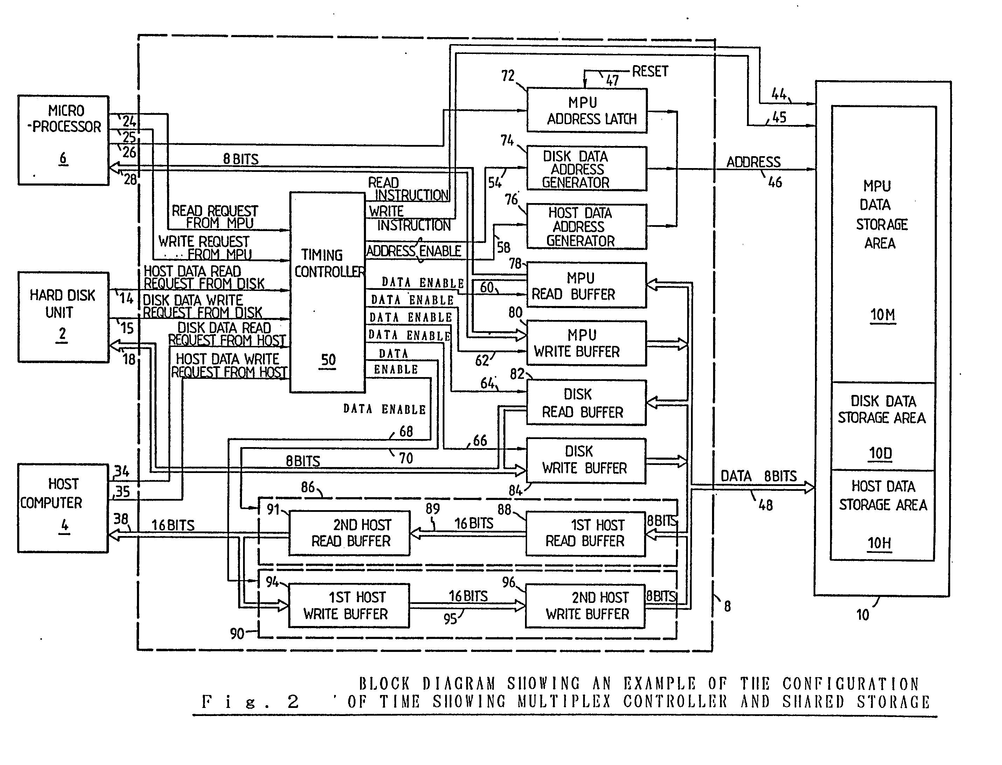

FIG. 2 illustrates detailed configurations of the time sharing multiplex control 8 and the shared storage 10. The shared storage 10 has an MPU data storage region 10M that is capable of storing 7K byte MPU data, a disk data storage region 10D that is capable of storing 512 byte disk data, and a host data storage region 10H that is capable of storing 512 byte host data. The addresses in the host data storage region 10H range from 0 to 511, the addresses in the disk data storage region 10D from 512 to 1023, and the addresses in the MPU data storage region 10M from 1024 to 8023.

The time sharing multiplex control 8 comprises a timing control 50, an MPU address latch 72, a disk data address generator 74, a host data address generator 76, an MPU read buffer 78, an MPU write buffer 80, a disk read buffer 82, a disk write buffer 84, a host read first-in first-out (FIFO) buffer 86, and a host write FIFO buffer 90.

During the write cycle, the MPU address latch 72 receives from the microprocessor 6 through a line 26 the 16 bit address that indicates a specific storage location in the region 10M where the microprocessor 6 desires to write a 8 bit MPU data thereinto and holds it; on the other hand, during the read cycle, it receives from the microprocessor 6 through a line 26 a 16 bit address that shows a specific storage location in the region 10M where the microprocessor 6 desires to read the data therefrom and holds it; then, it outputs the address held thereby to the shared storage region 10. The content of the MPU address latch 72 is reset by a signal on a line 47, upon accomplishing its read or write.

The disk data address generator 74, consisting of a down-counter that counts the addresses by decreasing the count value one by one from 1023 to 512 every time it receives an address enable signal from the timing control 50 through a line 54, outputs the counted values as the addresses to the shared storage 10 through the line 46.

The host data address generator 76, consisting of a down-counter that counts the addresses by decreasing the count value one by one from 511 to 0 every time it receives an address enable signal from the timing control 50 through a line 58, outputs the counted values as the addresses to the shared storage 10 through the line 46.

Upon receiving a data enable signal from the timing control 50 through a line 60, the MPU read buffer 78 receives an 8 bit MPU data read from the shared storage through the 8 bit data bus 48, temporarily stores it and, then, feeds it to the microprocessor 6 through another 8 bit data bus 28.

Upon receiving a data enable signal from the timing control 50 through a line 62, the MPU write buffer 80 receives an 8 bit MPU data outputted from the microprocessor 6 through the 8 bit data bus 28, temporarily stores it and, then, feeds it to the shared storage 10 through the data bus 48.

Upon receiving a data enable signal from the timing control 50 through a line 64, the disk read buffer 82 receives an 8 bit host data read from the shared storage 10 through the data bus 48, temporarily stores it and, then, feeds it to the hard disk unit 2 through another 8 bit data bus 18.

Upon receiving a data enable signal from the timing control 50 through a line 66, the disk write buffer 84 receives an 8 bit disk data outputted from the hard disk unit 2 through the data bus 18, temporarily stores it and, then, feeds it to the shared storage 10 through the data bus 48.

The host read FIFO buffer 86 consists of a first host read buffer 88 with its 8 bit input connected to the shared storage 10 through the bus 48 and its output being 16 bits, and a second host read buffer 91 with its 16 bit input connected with the output of the first host read buffer 88 through a 16 bit data bus 89 and its 16 bit output connected to the host computer 4 through a 16 bit data bus 38. The first host read buffer 88 stores an 8 bit disk data read out of the shared storage 10 as upper 8 bits, as it receives a data enable signal from the timing control 50 through a line 68, with the first read request from the host computer 4 granted, and stores an 8 bit disk data read out of the shared storage 10 as the lower 8 bits, as it receives a data enable signal from the timing control 50 through the line 68, with the next read request from the host computer granted. The second host read buffer 91 receives a 16 bit data from the first host read buffer 88 in response to the data enable signal based on the next read request grant and feeds it to the host computer 4 through a 16 bit bus 38. That is the host computer 4 needs to issue two read requests to read the 16 bit disk data (which was formerly two 8 bit disk data).

The host write FIFO buffer 90 consists of a first host write buffer 94 with its 16 bit input connected to the host computer 4 through a 16 bit data bus 38 and its output being 16 bits, and a second host write buffer 96 with its 16 bit input connected to the output of the first host write buffer 94 through a 16 bit data bus 95 and its 8 bit output connected to the shared storage 10 through the 8 bit data bus 48. Upon receiving a data enable signal from the timing control 50 through a line 70, with the first write request by the host computer 4 granted, the first host write buffer 94 holds the 16 bit host data outputted from the host computer 4, and outputs it to the second host write buffer 96; then, the second host write buffer 96 feeds the upper 8 bits of the 16 bit host data to the shared storage 10 through the bus 48. Then, upon receiving a data enable signal from the timing control 50 through the line 70, with the next write request by the host computer 4 granted, the second host write buffer 96 feeds the lower 8 bits of the 16 bit host data to the shared storage 10 through the bus 48. Accordingly, the host computer 4 needs to issue two write requests to write the 16 bit host data into the shared storage 10.

The timing control 50 receives MPU data read and write requests from the microprocessor 6 through lines 24 and 25, host data read request and disk data write request from the hard disk unit 2 through lines 14 and 15, and disk data read request and host data write request from the host computer 4 through lines 34 and 35.

During the read cycle, the timing control 50 processes the read requests by the microprocessor 6, hard disk unit 2 and the host computer 4 in the first, second and the third priority, respectively, and during the write cycle, it processes the write requests by the microprocessor 6, hard disk unit 2 and the host computer 4 in the first, second and the third priority, respectively.

The timing control 50 outputs data enable signals to lines 60, 64 and 68, respectively, when it grants the read requests by the microprocessor 6, the hard disk unit 2 and the host computer 4, respectively, during the read cycle. The data enable signals outputted to the lines 60, 64 and 68 never overlaps with one another in timing. The timing control 50 outputs data enable signals to lines 62, 66 and 70, respectively, when it grants the write requests by the microprocessor 6, the hard disk unit 2 and the host computer 4, respectively, during the write cycle. The data enable signals outputted to the lines 62, 66 and 70 never overlaps with one another in timing.

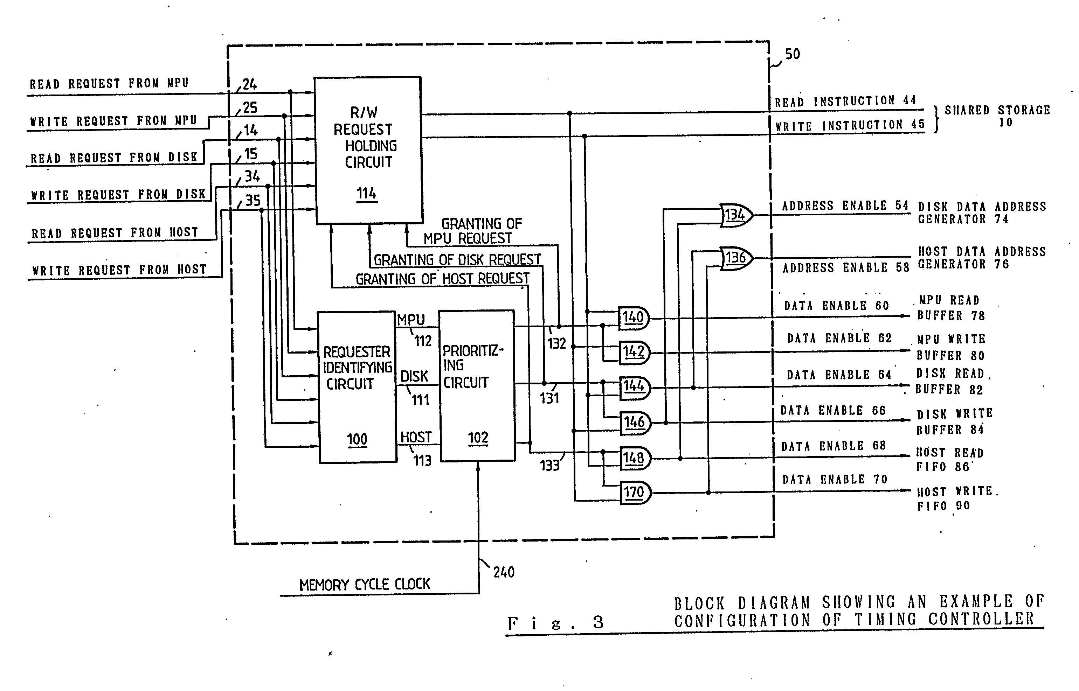

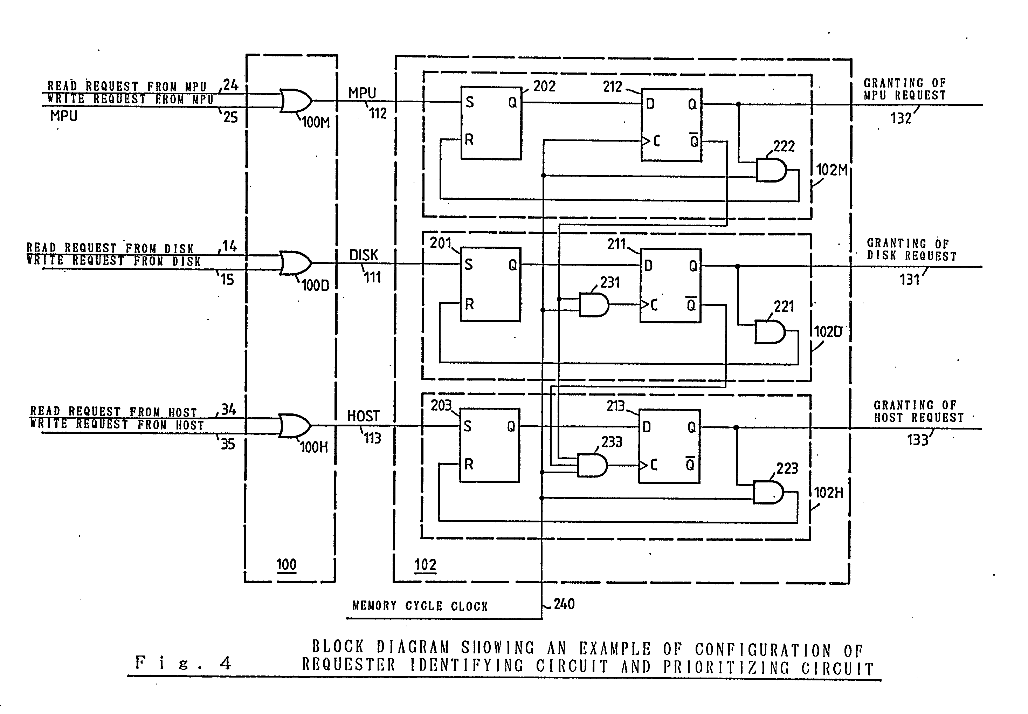

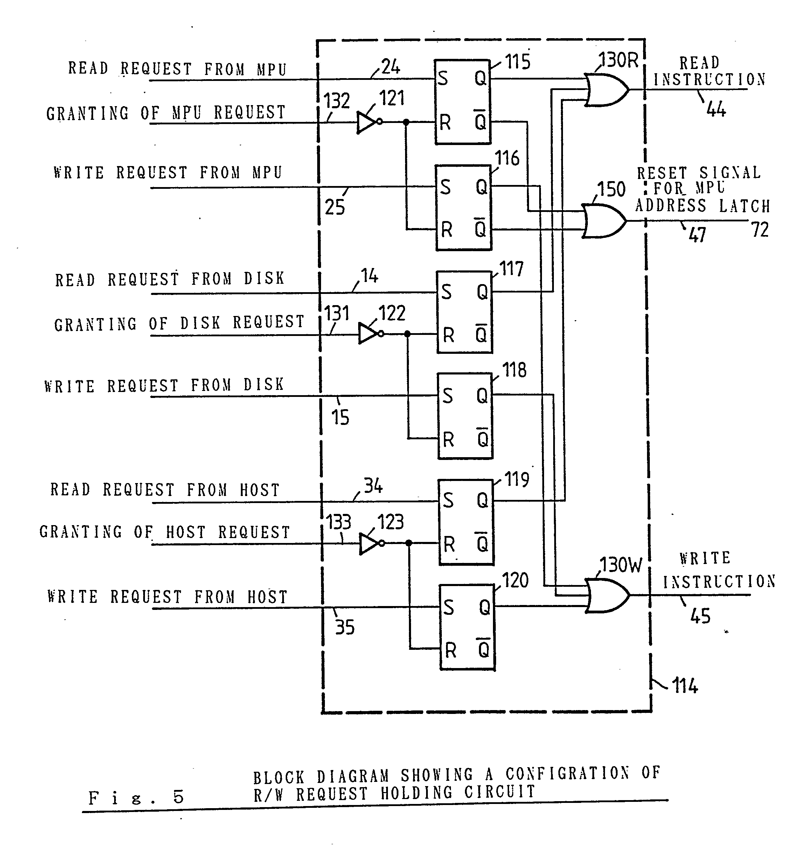

FIG. 3 illustrates a detailed configuration of the timing control 50. As shown in the figure, the timing control 50 comprises a requester identifying circuit 100, a prioritizing circuit 102, an R/W request holding circuit 114, six AND gates 140, 142, 144, 146, 148 and 150, and two OR gates 134 and 136. FIG. 4 illustrates detailed configurations of the requester identifying circuit 100 and the prioritizing circuit 102 of Figure 3, and FIG. 5 that of the R/W request holding circuit 114 of FIG. 3.

Referring to FIGS. 3, 4 and 5, the requester identifying circuit 100 consists of an OR gate 100M that receives read and write requests (high level signals) by the microprocessor 6 through lines 24 and 25, another OR gate 100D that receives read and write requests (high level signals) by the hard disk unit 2 through lines 14 and 15, and still another OR gate 100H that receives read and write requests (high level signals) from the host computer 4 through lines 34 and 35. The outputs (high level signals) from the OR gates 100M, 100D and 100H indicate that the read or write requesters are, respectively, the microprocessor 6, hard disk unit 2 and the host computer 4.

The prioritizing circuit 102 comprises an MPU request grant synchronizing circuit 102M, a disk request grant synchronizing circuit 102D, and a host request grant synchronizing circuit 102H.

The MPU request grant synchronizing circuit 102M outputs to a line 132 an MPU request grant signal for permitting access (i.e., read or write) to the shared storage 10 from the microprocessor 6 for a definite period of time synchronized with the memory cycle, as it receives the 10MHz memory cycle clock of the shared storage 10 through a line 240, while receiving from the OR gate through a line 112 a signal indicating that the read or write requester is the microprocessor 6.

Particularly, the MPU request grant synchronizing circuit 102M comprises an RS latch 202, a type D synchronizing flip-flop 212 and an AND gate 222. Upon receiving at its set input a signal that identifies the requester to be the microprocessor 6, the RS latch 202 brings its Q output to a high level. Having received the Q output from the RS latch 202 at its D input and the memory cycle clock at its clock input, the type D synchronizing flip-flop 212 keeps its Q output at a high level for a period of time from the memory cycle clock next to the memory cycle clock given after the Q output from the latch 202 is brought to the high level to the next memory cycle clock. The high level part of the Q output from this type D synchronizing flip-flop 212 is provided as the MPU request grant signal. The Q output from the type D synchronizing flip-flop 212 and the memory clock are inputted to the AND gate 222 and the output from the and gate 222 resets the RS latch 202.

Upon receiving not only the signal that identifies the read or write requester to be the hard disk unit 2 from the OR gate 100D through a line 111, but also the memory cycle clock through the line 240, the disk request grant synchronizing circuit 102D outputs to a line 131 a disk request grant signal for permitting access from the hard disk unit to the shared storage 10 for a definite period of time synchronized with the memory cycle during which time the MPU request grant signal is not being outputted.

Specifically describing, the disk request grant synchronizing circuit 102D comprises an RS latch 201, a type D synchronizing flip-flop 211, and AND gates 221 and 231. The RS latch 201 brings its Q output to a high level, upon receiving at its set input a signal that identifies the requester to be the hard disk unit 2. The AND gate 231 has one of its inputs connected to the Q output of the type D synchronizing flip-flop 212 of the MPU request grant synchronizing circuit 102M, the other input connected to the line 240 for feeding the memory cycle clock and its output connected to the clock input of the type D synchronizing flip-flop 211. Accordingly, the AND gate 231 does not pass the memory cycle clock to the type D synchronizing flip-flop 211, while the MPU request grant signal is being outputted. For this reason, the type D synchronizing flip-flop 211 keeps the Q output at a high level for a period of time from the memory cycle clock next to the memory cycle clock first fed from the AND gate 231 after receiving at its D input the high level Q output from the RS latch 201 to the next memory cycle clock. The high level part of the Q output from this type D synchronizing flip-flop 211 is provided as the disk request grant signal. The high level Q output from the type D synchronizing flip-flop 211 and the memory cycle clock are inputted to the AND gate 221 and the output from the AND gate 221 resets the RS latch 201.

The host request grant synchronizing circuit 102H, as it has received not only the signal that identifies the read or write requester to be the host computer 4 from the OR gate 100H through a lien 113 but also the memory cycle clock through the line 240, outputs to a line 133 a host request grant signal that permits access from the host computer 4 to the shared storage 10 for a definite period of time synchronized with the memory cycle during which time the MPU request grant signal and the disk request grant signal are not being outputted.

Specifically describing, the host request grant synchronizing circuit 102H comprises an RS latch 203, a type D synchronizing flip-flop 213 and AND gates 223 and 233. Upon receiving at its set input a signal that identifies the requester to be the host computer 4, the RS latch 203 brings its Q output to a high level. The AND gate 233 has its first input connected to the Q output of the type D synchronizing flip-flop 212 of the MPU request grant synchronizing circuit 102M, its second input to the Q output of the type D synchronizing flip-flop 211 of the disk request grant synchronizing circuit 102D, its third input to the line 240 for feeding the memory cycle clock and its output connected to the clock input of the type D synchronizing flip-flop 213. Accordingly, the AND gate 233 does not pass the memory cycle clock to the type D synchronizing flip-flop 213, while the MPU request grant signal and the disk request grant signal are being outputted. For this reason, the D type synchronizing flip-flop 213 keeps its Q output at a high level for a period of time from the memory cycle clock next to the memory cycle clock first fed from the AND gate 233 after receiving at its D input the high level Q output from the RS latch 203 to the next memory cycle clock. The high level Q output from this type D synchronizing flip-flop 213 and the memory cycle clock are inputted to the AND gate 223 and the output from the AND gate 223 resets the RS latch 203.

The R/W request holding circuit 114 shown in FIGS. 3 and 5 is provided to surely give the read or write instruction to the shared storage 10, while the time sharing multiplex control 8 is reading or writing data from or in the shared storage 10.

Specifically describing, the R/W request holding circuit 114 comprises, as shown in FIG. 5, six RS latches 115, 116, 117, 118, 119 and 120, three NOT gates 121, 122 and 123 and three OR gates 130R, 130W and 130.

During the read cycle, the RS latch 115 keeps its Q output at a high level, as it receives as its set input the read request by the microprocessor 6, but brings its Q output to a low level, when no MPU request grant signal (a high level signal) is outputted to the line 132 and a high level signal is added to its reset input from the NOT gate 121. Accordingly, the RS latch 115 and the NOT gate 121 have the function of holding the read instruction, while the time sharing multiplex control 8 is making its reading operation, based on the read request by the microprocessor 6 (the high level Q output from the RS latch 115 is the read instruction). Similarly, the RS latch 117 and the NOT gate 112 function to hold the read instruction, while the time sharing multiplex control 8 performs the read operation based on the request by the hard disk unit 2, the former receiving the read request by the hard disk unit 2 through a line 14, and the latter the disk request grant signal through the line 131, respectively. Also similarly, the RS latch 119 and the NOT gate 123 function to hold the read instruction, while the time sharing multiplex control 8 performs the read operation based on the request by the host computer 4, the former receiving the read request by the host computer 4 through a line 34, and the latter the host request grant signal through the line 133, respectively.

During the write cycle, the RS latch 116 keeps its Q output at a high level, as it receives at its set input the write request by the microprocessor 6, but brings it to a low level, when no MPU request signal (high level signal) is outputted to the line 132 and a high level signal is added to its reset input from the NOT gate 121. Accordingly, the RS latch 116 and the NOT gate 121 have the function of holding the write instruction (the high level Q output from the RS latch 116 is the write instruction), while the time sharing multiplex control 8 performs the write operation from the microprocessor 6. Similarly, the RS latch 118 and the NOT gate 122 function to hold the write instruction, while the time sharing multiplex control 8 performs the write operation based on the request by the hard disk unit 2, the former receiving the disk write request through a line 15, and the latter disk request grant signal through the line 131, respectively. Similarly, the RS latch 120 and the NOT gate 123 function to hold the write instruction, while the time sharing multiplex control 8 performs the write operation based on the request by the host computer 4, the former receiving the write request by the host computer 4 through a line 35, and the latter the host request grant signal through the line 133, respectively.

The Q outputs from the RS latches 115, 117 and 119 are fed to the OR gate 130R and the OR gate 130R outputs the final read instruction to the line 44. Accordingly, this read instruction is being outputted, while the time sharing multiplex control 8 performs the read operation based on the requests by the microprocessor 6, the hard disk unit 2 and the host computer 4.

The Q outputs from the RS latches 116, 118 and 120 are fed to the OR gate 130W, and the OR gate 130W outputs the final write instruction to the line 45. Accordingly, this write instruction is outputted, while the time sharing multiplex control 8 performs the write operation based on the requests by the microprocessor 6, the hard disk unit 2 and host computer 4.

The Q outputs from the RS latches 115 and 116 are logically added by the OR gate 130, and this logical sum is provided as the reset signal for the MPU address latch 72 of FIG. 2. The Q outputs from the RS latches 115 and 116 are brought to a high level, when the read and the write are performed by the time sharing multiplex control 8 based on the read and write request by the microprocessor 6, respectively, have been accomplished; therefore, the leading edges of these Q outputs may be utilized for resetting the MPU address latch 72.

Returning to FIG. 3, the prioritizing circuit 102 feeds the MPU request grant signal, disk request grant signal and the host request grant signal, respectively, to each one of inputs of AND gates 140 and 142, AND gates 144 and 146, and AND gates 148 and 150 through lines 131, 132 and 133. To each of the other inputs of the AND gates 142, 146 and 150, the read instruction is fed through the line 44, while to each of the other inputs of the AND gates 140, 144 and 148, the write instruction is fed through the line 45.

The high level outputs from the AND gates 140, 142, 144, 146, 148 and 150 are respectively provided as the data enable signals hereabove described to an MPU read buffer 78, an MPU write buffer 80, a disk read buffer 82, a disk write buffer 84, a host read FIFO buffer 86 and a host write FIFO buffer 90.

The outputs from the AND gates 146 and 148 are logically added by the OR gate 134, and this logical sum, when being at a high level, is provided as the address enable signal to the disk data address generator 74. The outputs from the AND gates 144 and 150 are logically added by the OR gate 136, and this logical sum, when being at a high level, is provided as the address enable signal hereabove-described to the host data address generator 76.

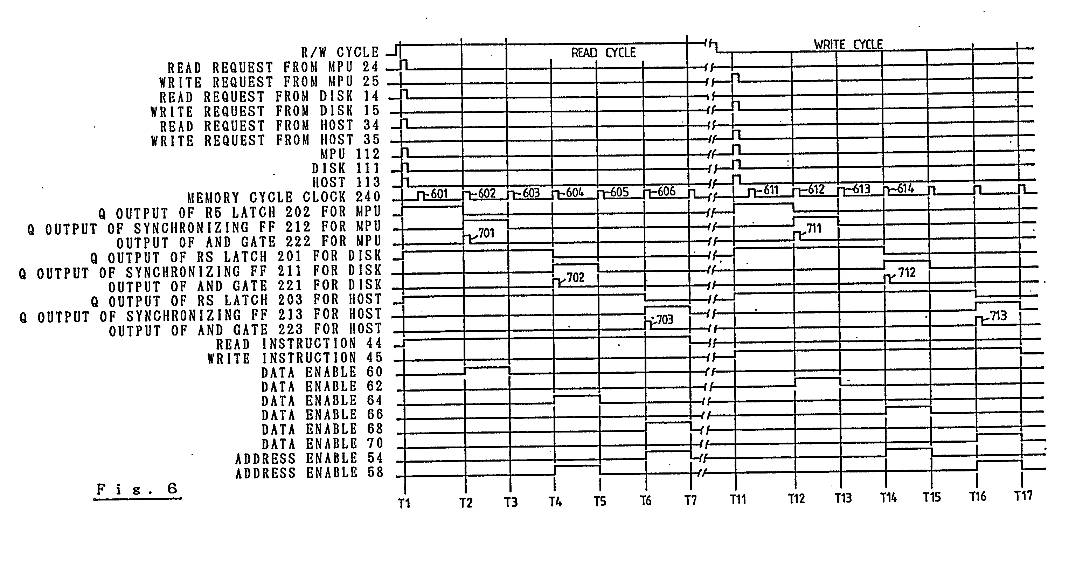

FIG. 6 is a time chart showing the operation of the embodiment of this invention illustrated in FIGS. 1 through 5. At a point T1 of the read cycle of the shared storage 10, read requests are assumed to be issued simultaneously from the microprocessor 6, the hard disk unit 2 and the host computer 4. Then, not only the Q outputs from the RS latches 202, 201 and 203 in the prioritizing circuit 102 of FIG. 4 are brought to a high level, but the Q outputs from the RS latches 115, 117 and 119 of the R/W request holding circuit 114 are also brought to a high level, causing a read instruction to be outputted to the line 44. The microprocessor 6 also outputs a 16 bit address indicating the storage location where it desires to take a read, simultaneously as it issues a read request, of which address is to be held by the MPU address latch 72 of FIG. 2.

The type D synchronizing flip-flop 212 of the MPU request grant synchronizing circuit 102M keeps the Q output at a high level for a period of time from the memory cycle clock 602 next to the memory cycle clock 601 that is given after the Q output of the RS latch 202 is brought to a high level to the next memory cycle clock 603. This high level Q output is provided as the MPU request grant signal, to be logically multiplied with the read instruction at the AND gate 140, and this logical product is provided as a data enable signal to the MPU read buffer 78. This causes, an 8 bit MPU data to be read at the storage location in the shared storage 10 indicated by the address held by the MPU address latch 72, and this data is fed to the microprocessor 6 through the bus 48, the MPU read buffer 78 and the bus 28.

As the memory cycle clock 602 is generated and the MPU request grant signal is outputted, the AND gate 222 outputs a high level signal 701, thereby resetting the RS latch 202. As the MPU request grant signal ceases to be generated, the Q output from the RS latch 115 of the R/W request holding circuit 114 of FIG. 5 is brought to a high level; as a consequence, a reset signal is outputted from the OR gate 130 to the MPU address latch 72.

As the MPU request grant signal ceases to be generated, the Q output from the type D synchronizing flip-flop 212 of the MPU request grant synchronizing circuit 102m is brought to a high level and, therefore, it becomes possible to feed the memory cycle clock to the clock input of the type D synchronizing flip-flop 211 through the AND gate 231 of the disk request grant synchronizing circuit 102D. Then the flip-flop 211 keeps its Q output at a high level for a period of time from the memory cycle clock 604 next to the memory cycle clock 603 first fed from the AND gate 231 to the next memory cycle clock 605. This high level Q output, provided as the disk request grant signal, is logically multiplied by the read instruction at the AND gate 144, and this logical product is provided as the data enable signal to the disk read buffer 82.

On the other hand, the data enable signal outputted from the AND gate 144 is also fed to the OR gate 136 and the OR gate 136 outputs the address enable signal to the host data address generator 76 of FIG. 2. In response thereto, the host data address generator 76 addresses a specific storage location in the host data storage region 10H of the shared storage 10, with the count value decreased by 1, to read a 1 byte (or 8 bit) data therefrom. The host data thus read out is fed to the disk unit 2 through a bus 48, disk read buffer 82 and a bus 18.

As the memory cycle clock 604 is generated and the disk request grant signal is outputted, the AND gate 221 outputs a high level signal 702, thereby resetting the RS latch 201.

When the disk request grant signal ceases to be generated, the Q output from the type D synchronizing flip-flop 211 in the disk request grant synchronizing circuit 102D is brought to a high level; as a result, it becomes possible that the memory cycle clock may be fed to the clock input of the type D synchronizing flip-flop 213 through the AND gate 233 in the host request grant synchronizing circuit 102H. Then, the flip-flop 213 keeps its Q output at a high level for a period of time from the memory cycle clock 606 next to the memory cycle clock 605 first fed from the AND gate 233 to the next memory cycle clock 607. This high level Q output, provided as the host request grant signal, is logically multiplied by the read instruction at the AND gate 148 and this logical product is provided as the enable signal to the host read FIFO buffer 86.

On the other hand, the data enable signal outputted from the AND gate 148 is fed to the OR gate 134. Then, the OR gate 134 outputs the address enable signal to the disk data address generator 74 of FIG. 2. In response thereto, the disk data address generator 74 addresses a specified storage location in the disk data storage region in the shared storage 10, with the count value decreased by 1, to read 1 byte data therefrom. The disk data thus read out is fed to the host computer 4 through a bus 48, the host read FIFO buffer 86 and another bus 38. It should be noted that the RS latch 203 is reset by the output from the AND gate 223 that logically multiplies the host request grant signal with the memory cycle clock 606.

In the following, the operation during the write cycle in the shared storage 10 is described: At the point T11 shown in the time chart of FIG. 6, write requests is issued simultaneously by the microprocessor 6, the disk unit 2 and the host computer 4. Then, not only the Q outputs from the RS latches 202, 201 and 203 in the prioritizing circuit 102 of FIG. 4 but also the Q outputs of the RS latches 116, 118 and 120 in the R/W request holding circuit 114 of FIG. 5 are brought to a high level; as a result, the write instruction is outputted to the line 45.

Simultaneously as issuing a write request, the microprocessor 6 not only feeds the 8 bit MPU data it desires to write into the shared storage 10 to the MPU write buffer 80 through a bus 28, but also outputs the address that indicates the storage location where it desires to write said MPU data to the MPU address latch 72 through a line 26. The disk unit 2, simultaneously as issuing a write request, feeds the 8 bit disk data it desires to write into the shared storage 10 to the disk write buffer 84 through a bus 18. The host computer 4, simultaneously as issuing a write request, feeds the disk data it desires to write into the shared storage 10 to the host write FIFO 90 through a bus 38.

The type D synchronizing flip-flop 212 in the MPU request grant synchronizing circuit 102M keep its Q output at a high level for a period of time from the memory cycle clock 612 next to the memory cycle clock 611 that is given after the Q output from the RS latch 202 is brought to a high level to the next memory cycle clock 613. This high level Q output, provided as the MPU request grant signal, is multiplied by the write instruction at an AND gate 142 and this logical product is provided as the data enable signal to an MPU write buffer 80. Then, the MPU data is written from the MPU write buffer 80 through a bus 48 into the storage location in the shared storage 10 indicated by the address held in the MPU address latch 72.

As not only the memory cycle clock 612 is generated, but the MPU request grant signal is outputted, the AND gate 222 outputs a high level signal 711, thereby resetting the RS latch 202. When the MPU request grant signal ceases to be generated, the Q output from the RS latch 116 in the R/W request holding circuit of FIG. 5 is brought to a high level; as a result, a reset signal is outputted from the OR gate 130 to the MPU address latch 72.

When the MPU request grant signal ceases to be generated, the Q output from the type D synchronizing flip-flop 212 in the MPU request grant synchronizing circuit 102M is brought to a high level; as a result, it becomes possible to feed the memory cycle clock to the clock input of the type D synchroniz ing flip-flop 211 through the AND gate 231 in the disk request grant synchronizing circuit 102D. Consequently, the flip-flop 211 keeps its Q output at a high level for a period of time from the memory cycle clock 614 next to the memory cycle 613 first fed from the AND gate 231 to the next memory cycle clock 615. This high level Q output, provided as the disk request grant signal, is logically multiplied by the write instruction at the AND gate 146 and this logical product is provided as the data enable signal to the disk write buffer 84.

On the other hand, the data enable signal outputted from the AND gate 146 is also fed to the OR gate 134 and the OR gate 134, then, outputs the address enable signal to the disk data address generator 74 of FIG. 2. In response thereto, the disk data address generator 74 addresses a specific storage location in the disk data storage region 10D in the shared storage 10 and into this storage thus addressed, is written the 1 byte disk data temporarily stored in the disk write buffer 84.

As the memory cycle clock 614 is generated and the disk request grant signal is outputted, the AND gate 221 outputs a high level signal 712, thereby resetting the RS latch 201.

When the disk request grant signal ceases to be generated, the Q output from the type D synchronizing flip-flop 211 in the disk request grant synchronizing circuit 102D is brought to a high level. Then, it becomes possible to feed the memory cycle clock to the clock input of the type D synchronizing flip-flop 213 through the AND gate 233 in the host request grant synchronizing circuit 102H. On this account, the Q output of the flip-flop 213 is kept at a high level for a period of time from the memory cycle clock 616 next to the memory cycle clock 615 first fed from the AND gate 233 to the next memory cycle clock 617. This high level Q output, provided as host request grant signal, is logically multiplied by the write instruction at the AND gate 150, and this logical product is provided as the data enable signal to the host write FIFO buffer 90.

On the other hand, the data enable signal outputted from the AND gate 150 is fed to the OR gate 136. Then, the OR gate 136 outputs the address enable signal to the host data address generator 76 of FIG. 2. In response thereto, the host data address generator 76 addresses a specific storage location in the host data storage region 10H in the shared storage 10, with the count value decreased by 1, and into this storage thus addressed, is written the upper 8 bits of the 16 bit host data temporarily stored in the second host write buffer 96 in the host write FIFO buffer 90. The lower 8 bits are written in the next address in the shared storage 10, when the next write request is generated by the host computer 4. As hereabove-described, the host computer 4 generates the write request twice in writing a 16 bit data.

While in the above-described embodiment, the address outputted by the microprocessor 6 to the MPU address latch 72 is set to indicate the storage location in the MPU data storage region 10M in the shared storage 10, it is possible to have the microprocessor 6 output to the MPU address latch 72 the addresses that indicates the storage location in the disk data storage location in the disk data storage region 10D and the host data storage region 10H, thereby enabling the microprocessor 6 to read and write the disk data and the host data and to test these data, and correct errors, if any.

In the embodiment, the disk data address generator 74 and the host data address generator 76 are configured with a down-counter, but they may be configured with an upcounter. For the address generators 74 and 76, latches like the MPU address latch 72 that holds the addresses outputted from the disk unit 2 and the host computer 4 may be utilized. However, since the disk data and the host data in the shared storage 10 are read and written as overall data, use of a counter which alters the count value at every time of access request as the address generators is advantageous in simplifying the configuration rather than have the disk unit 2 or the host computer 4 generate the address for each 1 byte data.

The embodiment hereabove-described concerns magnetic hard disk units, but this invention is not limited to them, but is applicable to magnetic floppy disks, magneto-optical disks or optical disk units. In short, it is applicable to whatever type of disk units, if only its operation is controlled by a microprocessor to feed and receive data to and from a host computer.

## Claims

(1) A disk unit the operation of which is controlled by a microprocessor and which feeds and receives data to and from a host computer, comprising:
shared storage means; and
time sharing multiplex control means for writing data outputted from said microprocessor, said host computer and said disk unit into said shared storage means in a predetermined priority and for reading data stored in said shared storage means to said microprocessor, said host computer and said disk unit in a predetermined priority.

(2) A storage control system for a disk unit as claimed in Claim (1) having a prioritizing circuit that gives the first priority to reading and writing of data between said microprocessor and said shared storage means, the second priority to reading and writing of data between said disk unit and said shared storage means, and the third priority to reading and writing data between said host computer and said shared storage means.

EP 0 374 114 A2

CONTROL
COMMAND

MICRO-
PROCESSOR

6

READ REQUEST FROM MPU

WRITE REQUEST FROM MPU    24

ADDRESS    25

8 BITS    20

28

HARD DISK    HARD DISK
CONTROLLER

12    22

HARD DISK UNIT    2

READ REQUEST FROM
DISK    14

WRITE REQUEST FROM
DISK    15

8 BITS

18

HOST
COMPUTER

4

READ REQUEST FROM HOST

WRITE REQUEST FROM HOST    34

35

16 BITS

38

TIME SHARING
MULTIPLEX
CONTROLLER

8

READ INSTRUCTION    44

WRITE INSTRUCTION    45

ADDRESS    46

DATA    8 BITS

48

SHARED
STORAGE

10

BLOCK DIAGRAM SHOWING STRAGE CONTROL FOR
Fig. 1    A HARD DISK UNIT ACCORDING TO THE INVENTION

Fig. 2 · BLOCK DIAGRAM SHOWING AN EXAMPLE OF THE CONFIGURATION OF TIME SHOWING MULTIPLEX CONTROLLER AND SHARED STORAGE

BLOCK DIAGRAM SHOWING AN EXAMPLE OF
CONFIGURATION OF TIMING CONTROLLER

F i g . 3

EP 0 374 114 A2

READ REQUEST FROM MPU 24
WRITE REQUEST FROM MPU 25
MPU

READ REQUEST FROM DISK 14
WRITE REQUEST FROM DISK 15

READ REQUEST FROM HOST 34
WRITE REQUEST FROM HOST 35

MPU 112
DISK 111
HOST 113

100M
100D
100H

100

GRANTING OF
MPU REQUEST
132

GRANTING OF
DISK REQUEST
131

GRANTING OF
HOST REQUEST
133

202  212  222  102M
201  211  231  221  102D
203  213  233  223  102H

102

MEMORY CYCLE CLOCK — 240

EP 0 374 114 A2

Fig. 4    BLOCK DIAGRAM SHOWING AN EXAMPLE OF CONFIGURATION OF
REQUESTER IDENTIFYING CIRCUIT AND PRIORITIZING CIRCUIT

READ REQUEST FROM MPU

GRANTING OF MPU REQUEST

WRITE REQUEST FROM MPU

READ REQUEST FROM DISK

GRANTING OF DISK REQUEST

WRITE REQUEST FROM DISK

READ REQUEST FROM HOST

GRANTING OF HOST REQUEST

WRITE REQUEST FROM HOST

READ INSTRUCTION

RESET SIGNAL FOR MPU ADDRESS LATCH

WRITE INSTRUCTION

Fig. 5   BLOCK DIAGRAM SHOWING A CONFIGRATION OF R/W REQUEST HOLDING CIRCUIT

Fig. 6

BLOCK DIAGRAM OF A MEMORY CONFIGURATION FOR
A CONVENTIONAL HARD DISK UNIT

F i g . 7